Europäisches Patentamt

European Patent Office

Office européen des brevets

(19)

(11) **EP 0 806 819 B1**

(12) **EUROPÄISCHE PATENTSCHRIFT**

(45) Veröffentlichungstag und Bekanntmachung des Hinweises auf die Patenterteilung:
**04.07.2001 Patentblatt 2001/27**

(51) Int Cl.[7]: **H02P 7/638**, H01R 43/12

(21) Anmeldenummer: **96107153.7**

(22) Anmeldetag: **07.05.1996**

(54) **Verfahren zur Verkürzung der Einlaufzeit von hochdrehenden kleinen Kommutatormaschinen**

Method to shorten the break-in time of high speed small commutator machines

Procédé pour réduire le temps de rodage de petites machines à collecteurs à grande vitesse

(84) Benannte Vertragsstaaten:
**CH GB IT LI NL SE**

(43) Veröffentlichungstag der Anmeldung:
**12.11.1997 Patentblatt 1997/46**

(73) Patentinhaber: **Berghänel Elektrotechnik**
**09119 Chemnitz (DE)**

(72) Erfinder: **Berghänel, Dietmar, Dipl.-Ing.**
**09119 Chemnitz (DE)**

(74) Vertreter: **Seerig & Hübner**
**Patentanwälte**
**Am Alten Bad 6**
**09111 Chemnitz (DE)**

(56) Entgegenhaltungen:
**EP-A- 0 582 516          EP-A- 0 647 012**
**DE-C- 19 517 403**

## Beschreibung

Die Erfindung bezieht sich auf ein Verfahren zur Verkürzung der Einlaufzeit von hochdrehenden kleinen Kommutatormaschinen gemäß dem Oberbegriff des Anspruchs 1. Dabei geht es um die Anpassung des Laufradius von Kohlebürsten an den Kommutator bei kleinen, in hohen Stückzahlen gefertigten Motoren.

Es ist aus DE-PS 3030357 bekannt, die Zeit für diese Anpassung durch die Einbringung von sublimierbaren Ammoniumsalzen zwischen der Lauffläche des Kommutators und der Kohlebürste zu verkürzen. Diese chemischen Substanzen bewirken in der Plasmaphase des Schleif- und Gleitkontaktes Radialreaktionen, die zum zwangsläufigen Abbau der Kohlenstoffmodifikation und somit zu einem starken Verschleiß der Kohlebürsten führen.

Nachteilig an diesem bekannten Verfahren ist die schädigende Wirkung der genannten chemischen Substanzen auf die Oberfläche des Kommutators. Diese wird rauh und verursacht damit einen vorzeitigen Ausfall des Systems Kohlebürste - Kommutator. Ungünstig ist hierbei auch die nur schwierig beherrschbare Einwirkungszeit dieser chemischen Substanzen.

Als Nachteil ist auch der hohe Funkstörgrad derartig behandelter Maschinen, insbesondere auch nach der Einlaufphase, zu nennen, welcher eine Folge der erhöhten Laufflächenrauhigkeit des Kommutators ist.

Es ist auch bekannt, die Kommutatoren einzeln vor dem Einlaufen oder gemeinsam mit der Kohlebürste während des Einlaufens mit einem Schleifmittel, zum Beispiel Bimsstein, zu behandeln.

In diesen Fällen ist der erhöhte mechanische Verschleiß die Grundlage für eine Verkürzung der Anpassungs- bzw. Einlaufzeit. Bei den genannten Verfahren werden häufig Schleifmittel eingesetzt, welche die Lebensdauer der in Motoren eingesetzten Wälz- oder Gleitlager einschränken.

Der anzustrebenden Minimierung der Fertigungszeit steht entgegen, daß jede Maschine einzeln zu behandeln ist.

Aus EP-A-0647012 ist weiterhin bekannt, Kohlebürsten in Kommutatormaschinen durch den Betrieb von Motoren mit Frequenzen, die größer als die Nennfrequenz sein müssen, beschleunigt einzulaufen.

Der im Hauptanspruch angegebenen Erfindung liegt das Problem zugrunde, durch exakt gesteuerte Kommutierungsströme während der Einlaufzeit das Bindemittel in der Kohlebürste zu zerstören, damit den Anfangsverschleiß zu vergrößern und die Einlaufzeit zu verkürzen.

Die mit der Erfindung erzielbaren Vorteile bestehen darin, daß die Tiefe und der lokale Einsatz des in die Kohlebürste eindringenden Kommutierungsstromes definitiv einstellbar sind. Der Einlaufvorgang braucht auch nicht bis zum Erreichen des erfahrungsgemäß geforderten Traganteils der Kohlebürste zu erfolgen, denn im bestimmungsgemäßen Gebrauch der Maschine ist infolge des vorangegangenen Eingriffs in die materielle Bürstenstruktur eine weitere beschleunigte Anpassung bei Einhaltung der vorgeschriebenen Funkstörgrenzwerte in Verbindung mit einer hohen Lebenserwartung der Maschine zu erreichen. Durch den Betrieb bei höheren Frequenzen kann der Vorteil der Energieeinsparung aus zeitlicher und energetischer Sicht genutzt werden.

Vorteilhaft ist auch, daß das erfindungsgemäße Verfahren mit anderen bekannten Einlaufhilfen oder -verfahren kombinierbar ist.

Ausgehend von der Überlegung, daß die den Kommutierungsstrom $i_k$ treibende Spannung $e_k$ in guter Näherung aus der Summe von transformatorischer Spannung $e_{tr}$ und rotatorischer Spannung $e_{rot}$ besteht, und ausgehend von der Überlegung, daß die infolge des Kommutierungsstroms $i_k$ umgesetzte, die Gleitzone der Kohlbürste zersetzende, Energie aus dem Produkt von

$$W_k = C \cdot S \cdot 0{,}5\, L\, i_k^{\,2}$$

(darin sind C = Konstante, S = zurückgelegter Weg, L = wirksame Spuleninduktivität, $i_k$ = Kommutierungsstrom) besteht,

lassen sich Einfluß der Frequenz auf den Phasenwinkel des Kommutierungsstromes $i_k$ und damit seinen zeitlichen bzw. lokalen Einsatz sowie die Wirkung der Höhe des Kommutierungsstromes auf die Eindringtiefe in die Kohlebürste erklären. Damit die Bürste gleichmäßig verschleißt, soll der Kommutierungsstrom wirksam zu fließen beginnen wenn die Nut zwischen zwei Lamellen aufläuft, das heist sich in der ersten Hälfte der Bürstenbreite befindet.

Maschinen, die mit einem integrierten in Reihe geschalteten elektronischen Modul ausgerüstet sind, welcher nur bei Nennfrequenz bestimmungsgemäß arbeitet, können zum Zweck des Einlaufens mit einer der Nennfrequenz (als Stromversorgung für den Modul) überlagerten Einlauffrequenz (zum Verschieben der neutralen Zone und Einstellen des Kommutierungsstromes) betrieben werden. Das dazu erforderliche Verhältnis der beiden Ströme unterschiedlicher Frequenz ergibt sich motor- und modulspezifisch. Durch diese Maßnahme wird das aufwendige Kurzschließen des Moduls in der Fertigung erspart.

Eine elektrische Maschine erzeugt im Nennbetrieb Oberschwingungen, die zur Grundschwingung eine bestimmte Phasenlage haben, welche in der Regel 180° el beträgt. Werden, wie in obenstehendem Beispiel beschrieben, zwei Frequenzen überlagert, und ist die Einlauffrequenz gleich einer Oberschwingung, so hat der Kommutierungsstrom ein Maximum, wenn er mit der Oberschwingung phasengleich ist. Die Verschiebung der Phase zwischen Einlauffrequenz und Nennfrequenz kann demzufolge zur Einstellung des Kommutierungsstromes verwendet werden.

## Patentansprüche

1. Verfahren zur Verkürzung der Einlaufzeit von hochdrehenden kleinen Kommutatormaschinen durch zeitlich begrenzte Anwendung den Verschleiß der Kohlebürsten verstärkender Maßnahmen, wobei durch eine geeignete Einlauffrequenz, die größer als die Nennfrequenz ist, eine Verschiebung der neutralen Zone entgegen der Drehrichtung des Ankers ohne mechanische Veränderungen durch die Ankerrückwirkung erfolgt und durch die Formierung des Motorstromes der Kommutierungsstrom maschinenspezifisch eingestellt wird,
dadurch gekennzeichnet, daß die Einlauffrequenz oder das Einlauffrequenzgemisch so gewählt werden, daß der Kommutierungsstrom wirksam zu fließen beginnt, wenn in Drehrichtung betrachtet sich die Nut zwischen zwei Lamellen in der ersten Hälfte der Bürstenbreite befindet.

2. Verfahren nach Anspruch 1, dadurch gekennzeichnet, daß zur Versorgung elektronischer Module einer Maschine eine Mischung aus Nennfrequenz und Einlauffrequenz in einem für die Funktion der Gesamtheit erforderlichen Verhältnis erfolgt.

3. Verfahren nach Anspruch 1, dadurch gekennzeichnet, daß bei Mischung aus Nennfrequenz und einer ungeradzahligen Oberschwingung als Einlauffrequenz der maximale Kommutierungsstrom dann erreicht wird, wenn die ungeradzahlige Oberschwingung und die eigenerzeugte Oberschwingung phasengleich sind.

4. Verfahren nach Anspruch 1, dadurch gekennzeichnet, daß bei Mischung von Nennfrequenz und Einlauffrequenz durch Änderung des Phasenwinkels der Frequenzen zueinander der Kommutierungsstrom eingestellt wird.

5. Verfahren nach Anspruch 1, dadurch gekennzeichnet, daß Effektivwert und zeitlicher Einsatz des Kommutierungsstromes durch die Maschinenbelastung in der Einlaufphase bestimmt werden.

6. Verfahren nach Anspruch 1, dadurch gekennzeichnet, daß für das Einlaufverfahren auch von der Sinusform abweichende Kurvenformen Anwendung finden können.

7. Verfahren nach Anspruch 1, dadurch gekennzeichnet, daß das Einlaufen bei einer Überlagerung von Gleichstrom und der Einlauffrequenz erfolgt.

8. Verfahren nach Anspruch 1, dadurch gekennzeichnet, daß das Verfahren nur kurzzeitig im Bereich unter einer oder im Bereich weniger Minuten angewendet wird.

## Claims

1. Method for shortening the running-in time of high-speed small commutator machines by using a measure which increases the wear of the carbon brushes for a limited time, with the neutral zone being shifted in the opposite direction to the rotation direction of the armature, without any mechanical changes resulting from the armature reaction, by means of a suitable running-in frequency which is higher than the rated frequency, and the commutation current being set on a machine-specific basis by the forming of the motor current, characterized in that the running-in frequency or the running-in frequency mixture is chosen such that the commutation current starts to flow effectively when, viewed in the rotation direction, the slot is located between two laminates in the first half of the brush width.

2. Method according to Claim 1, characterized in that a mixture of the rated frequency and the running-in frequency is used in a ratio required for operation of the total entity in order to supply electronic modules of a machine.

3. Method according to Claim 1, characterized in that, if the running-in frequency is a mixture of the rated frequency and an odd-numbered harmonic, the maximum commutation current is reached when the odd-numbered harmonic and the intrinsically produced harmonic are in phase.

4. Method according to Claim 1, characterized in that, in the case of a mixture of the rated frequency and the running-in frequency, the commutation current is set by varying the phase angle of the frequencies with respect to one another.

5. Method according to Claim 1, characterized in that the root mean square value of the commutation current, and the time at which it starts, are determined by the machine load in the running-in phase.

6. Method according to Claim 1, characterized in that curve shapes other than the sinusoidal shape may also be used for the running-in method.

7. Method according to Claim 1, characterized in that the running-in process takes place with direct current and the running-in frequency being superimposed.

8. Method according to Claim 1, characterized in that the method is used only briefly, in the region of less than or in the region of a few minutes.

## Revendications

1. Procédé pour raccourcir le temps de mise en service de petites machines à commutateur à grande vitesse de rotation par l'application limitée dans le temps d'une mesure accentuant l'usure des balais de charbon, dans lequel, au moyen d'une fréquence de mise en service appropriée qui est plus élevée que la fréquence nominale, on opère un glissement de la zone neutre en sens contraire au sens de rotation de l'induit sans modifications mécaniques par la réaction d'induit et on règle le courant de commutation de façon spécifique à la machine par le formage du courant du moteur, caractérisé en ce que l'on choisit la fréquence de mise en service ou le mélange de fréquences de mise en service de manière telle que le courant de commutation commence à circuler activement lorsque, vue dans le sens de rotation, l'encoche entre deux lamelles se trouve dans la première moitié de la largeur des balais.

2. Procédé suivant la revendication 1, caractérisé en ce que, pour l'alimentation de modules électroniques d'une machine, il se produit un mélange de la fréquence nominale et de la fréquence de mise en service dans une proportion nécessaire pour le fonctionnement de l'ensemble.

3. Procédé suivant la revendication 1, caractérisé en ce que, lors du mélange de la fréquence nominale et d'une harmonique impaire comme fréquence de mise en service, le courant de commutation maximal est atteint lorsque l'harmonique impaire et l'harmonique autoproduite sont en phase.

4. Procédé suivant la revendication 1, caractérisé en ce que, lors du mélange de la fréquence nominale et de la fréquence de mise en service, le courant de commutation est réglé par une modification de l'angle de phase des fréquences l'une par rapport à l'autre.

5. Procédé suivant la revendication 1, caractérisé en ce que la valeur effective et l'application temporaire du courant de commutation sont déterminées par la charge de la machine dans la phase de mise en service.

6. Procédé suivant la revendication 1, caractérisé en ce que l'on peut appliquer également pour le procédé de mise en service des formes de courbes s'écartant de la forme sinusoïdale.

7. Procédé suivant la revendication 1, caractérisé en ce que la mise en service se fait avec une superposition d'un courant continu et de la fréquence de mise en service.

8. Procédé suivant la revendication 1, caractérisé en ce que le procédé n'est appliqué que brièvement pendant une durée de moins d'une minute ou pendant une durée de quelques minutes.